# EUROPEAN PATENT APPLICATION

(11) **EP 3 825 043 A1**
(43) Date of publication of application: **26.05.2021**
(21) Application number: 20205181.9
(22) Date of filing: 02.11.2020
(51) Int. Cl.: B22F 10/28, B22F 10/31, B22F 10/366, B22F 10/85, B22F 12/90, B22F 10/36, B33Y 30/00, B33Y 50/02

(54) **SKYWRITING ADJUSTMENT BY QMM3D**

(30) Priority: 20.11.2019 US 201916689357
(71) Applicant: Concept Laser GmbH, 96215 Lichtenfels (DE)
(72) Inventor: Werner, Juergen, 96215 Lichtenfels (DE); Graf, Dominic, 96215 Lichtenfels (DE)
(74) Representative: Hafner & Kohl PartmbB

(57) **Abstract**

Methods of calibrating an apparatus for additively manufacturing three-dimensional objects include performing a defined movement pattern with at least one beam guiding unit for guiding an energy beam along a defined beam path. The defined movement pattern may include at least one sky writing section and at least one irradiation section. The apparatus may include at least one irradiation device adapted to guide the energy beam across a beam guiding plane. An exemplary method may additionally include, generating a melt pool along the irradiation section, determining a melt pool signal via a determination device of the apparatus, comparing the position of the origin of the melt pool signal in the beam guiding plane with the irradiation section, and determining a calibration status based on the comparison result.

## Description

### BACKGROUND

Apparatuses for additively manufacturing three-dimensional objects and methods for calibrating the same are generally known from prior art. In said additive manufacturing apparatuses at least one energy beam is generated and guided across a beam guiding plane in order to selectively irradiate and thereby consolidate build material to layerwise build a three-dimensional object.

Further, it is known from prior art that irradiation devices which are used to guide the energy beam across the build plane have to be calibrated in order to assure that the energy beam is incident in the correct position on the uppermost layer of build material that is arranged in the beam guiding plane. Inter alia, the inertia of different components, such as a beam guiding mirrors, affects the positioning accuracy of the spot of the energy beam on the surface of build material. To calibrate such irradiation devices a method called "sky writing" is known, wherein according to "sky writing" the component that moves the energy beam, e.g. a beam guiding mirror, is moved before the energy beam is incident on the mirror or on the build plane in order to compensate the effects of inertia and the like on the irradiation process, e.g. to assure that the energy beam can be moved uniformly along a beam path. In other words, the beam guiding element that guides the energy beam across the beam guiding plane can be moved before the energy beam is guided to the beam guiding plane in order to avoid that inertia based errors are introduced into the irradiation process.

For determining the corresponding sky writing parameters, e.g. the difference between the start of the movement of the beam guiding unit or the beam guiding element and the start of the movement path of the energy beam in the beam guiding plane are determined in rather cumbersome and time-consuming processes, e.g. by irradiating different patterns on a specimen, such as a sheet metal, for example by varying the sky writing parameters and determining an optimal sky writing parameter by evaluating the different patterns on the specimen.

### BRIEF DESCRIPTION

Aspects and advantages will be set forth in part in the following description, or may be obvious from the description, or may be learned through practicing the presently disclosed subject matter.

In one aspect, the present disclosure embraces methods of calibrating an apparatus for additively manufacturing three-dimensional objects. An exemplary method includes performing a defined movement pattern with at least one beam guiding unit for guiding an energy beam along a defined beam path. The defined movement pattern may include at least one sky writing section and at least one irradiation section. The apparatus may include at least one irradiation device adapted to guide the energy beam across a beam guiding plane. An exemplary method may additionally include, generating a melt pool along the irradiation section, determining a melt pool signal via a determination device of the apparatus, comparing the position of the origin of the melt pool signal in the beam guiding plane with the irradiation section, and determining a calibration status based on the comparison result.

In another aspect, the present disclosure embraces apparatuses for additively manufacturing three-dimensional objects. Exemplary apparatuses may include at least one irradiation device adapted to guide at least one energy beam across a beam guiding plane. Exemplary apparatuses may be configured to perform methods of calibrating the apparatus in accordance with the present disclosure.

These and other features, aspects and advantages will become better understood with reference to the following description and appended claims. The accompanying drawings, which are incorporated in and constitute a part of this specification, illustrate exemplary embodiments and, together with the description, serve to explain certain principles of the presently disclosed subject matter.

### BRIEF DESCRIPTION OF THE DRAWINGS

A full and enabling disclosure, including the best mode thereof, directed to one of ordinary skill in the art, is set forth in the specification, which makes reference to the appended Figures, in which:
FIG. 1 shows an apparatus for additively manufacturing three-dimensional obj ects; and
FIG. 2 shows a beam guiding plane of the apparatus from FIG. 1.

Repeat use of reference characters in the present specification and drawings is intended to represent the same or analogous features or elements of the present disclosure.

### DETAILED DESCRIPTION

Reference now will be made in detail to exemplary embodiments of the presently disclosed subject matter, one or more examples of which are illustrated in the drawings. Each example is provided by way of explanation and should not be interpreted as limiting the present disclosure. In fact, it will be apparent to those skilled in the art that various modifications and variations can be made in the present disclosure without departing from the scope of the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

As used herein, the terms "first", "second", and "third" may be used interchangeably to distinguish one component from another and are not intended to signify location or importance of the individual components. The terms "a" and "an" do not denote a limitation of quantity, but rather denote the presence of at least one of the referenced item.

Here and throughout the specification and claims, range limitations are combined and interchanged, and such ranges are identified and include all the sub-ranges contained therein unless context or language indicates otherwise. For example, all ranges disclosed herein are inclusive of the endpoints, and the endpoints are independently combinable with each other.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems.

Exemplary embodiments of the present disclosure will now be described in further detail.

The invention relates to a method of calibrating an apparatus for additively manufacturing three-dimensional objects, wherein the apparatus comprises at least one irradiation device adapted to guide at least one energy beam across a beam guiding plane.

Thus, it is an object of the present invention to provide an improved method of calibrating an apparatus for additively manufacturing three-dimensional objects, wherein in particular a faster and more efficient calibration method is provided.

The object is inventively achieved by a method according to claim 1. Advantageous embodiments of the invention are subject to the dependent claims.

The method described herein is a method of calibrating an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be an apparatus in which an application of build material and a consolidation of build material is performed separately, such as a selective laser sintering apparatus, a selective laser melting apparatus or a selective electron beam melting apparatus, for instance.

The apparatus may comprise a number of functional units which are used during its operation. Exemplary functional units are a process chamber, an irradiation device, as described before, which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described above, the invention relates to a method of calibrating an additive manufacturing apparatus. The invention is based on the idea that a defined movement pattern is performed with at least one beam guiding unit of the irradiation device in order to guide an energy beam along a defined beam path, wherein the defined movement pattern comprises at least one sky writing section and at least one irradiation section. While guiding the energy beam along the at least one irradiation section a melt pool is generated along this irradiation section, wherein the melt pool signal can be determined via a determination device of the apparatus. Subsequently, the position of the origin of the melt pool signal in the beam guiding plane can be compared with the positions along the irradiation section and the calibration status is determined based on the comparison result.

In other words, it is possible to perform the calibration processes via the determination device of the apparatus allowing for an "in process" or "in apparatus" determination of the sky writing parameters instead of irradiating a corresponding pattern in a specimen that is analyzed outside of the apparatus afterwards. In particular, a beam guiding unit, e.g. a beam guiding element such as a beam guiding mirror, is used to perform the defined movement pattern which pattern comprises a sky writing section and an irradiation section.

As described before, the sky writing section involves a movement of the beam guiding unit without an irradiation of build material in the build plane or without the corresponding energy beam being guided to the beam guiding plane. The irradiation section describes the section of the movement pattern in which the beam guiding unit is moved for guiding the energy beam in the build plane and the energy beam is actually guided to the beam guiding plane. In other words, the sky writing section describes the part of the movement pattern of the beam guiding unit in which only the beam guiding unit is moved, but no energy beam is guided to the beam guiding plane, whereas the irradiation section describes the part of the movement pattern in which the beam guiding unit is moved and the energy beam is guided via the beam guiding unit in the build plane or the beam guiding plane, respectively.

Thus, by guiding the energy beam in the beam guiding plane corresponding to the irradiation section, a melt pool is generated via the energy beam, as the energy beam is incident on the corresponding material arranged in the beam guiding plane, such as build material or a corresponding test specimen, e.g. a sheet metal. The melt pool that is generated along the irradiation section generates a corresponding melt pool signal, e.g. radiation emitted from the section of the beam guiding plane that is irradiated via the energy beam. The corresponding melt pool signal can be determined via a determination device of the apparatus, e.g. an optical device adapted to receive radiation emitted from the melt pool.

The reception or the determination of the melt pool signal particularly allows for a comparison between the actual position of the origin of the melt pool signal, e.g. the position in the beam guiding plane that is actually irradiated with the energy beam and the nominal position of the irradiation section. In other words, the nominal position of the irradiation section, e.g. the position in the build plane that has to be irradiated, and the actual position of the origin of the melt pool signal, e.g. the position of the beam guiding plane that actually is irradiated, can be compared in order to determine whether a deviation between the nominal position and the actual position of the generated melt pool is present. Consequently, the comparison result can be used for determining a calibration status of the apparatus, e.g. for determining whether a calibration of the irradiation device is necessary or whether the irradiation device is already properly calibrated. Based on the calibration status it is particularly possible to derive whether an adjustment of at least one sky writing parameter is necessary, e.g. an increase or a decrease of an offset time or distance between the movement of the beam guiding unit and the movement of the energy beam in the beam guiding plane, e.g. the energy beam can be switched on or off corresponding to the offset time or offset distance.

This particularly allows for performing the calibration process directly inside the additive manufacturing apparatus without the necessity of irradiating a specimen, removing the specimen from the apparatus, evaluating the specimen and, if necessary, perform another iterative irradiation and evaluation step, if the first irradiation and evaluation identified a need for recalibrating the irradiation device or the apparatus, respectively. Instead, it is possible to "in situ" determine the sky writing parameter or determine the calibration status of the apparatus by using the determination device of the apparatus for directly determining the melt pool signal and a comparison between the actual melt pool signal and a nominal melt pool signal. For example, if a deviation between the actual and the nominal position of the melt pool signal is determined, a direct adjustment of the sky writing parameters can be performed and the adjusted parameters can be tested in another irradiation and a determination step without removing the specimen from the apparatus and evaluating the specimen outside the apparatus.

Thus, it is possible to determine whether the calibration status of the irradiation device and the apparatus is within acceptable limits and therefore, a further adjustment is not necessary. If a deviation between the determined position of the region of the melt pool signal and a nominal position of the origin of the melt pool signal is determined, an adjustment to at least one sky writing parameter, in particular a length of the sky writing section, can be performed based on the calibration status. For example, if a deviation between the position of the melt pool that is generated by guiding the energy beam across the beam guiding plane along the irradiation section and the nominal position of the melt pool is determined, the at least one sky writing parameter can be adjusted to bring the actual position and the nominal position into conformity. In particular, the length of the sky writing section, e.g. the section in which the beam guiding unit is moved corresponding to the defined movement pattern without guiding the energy beam across the build plane, can be adjusted. Dependent on the deviation, whether the melt pool is generated in advance to or after the nominal start position of the irradiation beam path, an increase or decrease of the sky writing section, e.g. by increasing or decreasing the offset, can be performed.

As described before, the determination of the melt pool signal can be performed for the determination device of the apparatus. The determination may particularly be performed with the determination device that is arranged in line with the optical path of the energy beam. In other words, the energy beam is guided at least partially along the same optical path that is used by the melt pool signal, e.g. radiation reflected at the beam guiding plane or emitted from the beam guiding plane, in particular thermal radiation. Thus, the melt pool signal can travel basically at least in part the same optical path as the energy beam but in opposite direction in order to reach the determination device, e.g. a sensor of the determination device. This allows for simultaneously determining the melt pool signal and irradiating the build material or specimen arranged in the beam guiding plane. The area that is observed with the determination device can therefore be guided simultaneously with the energy beam across the beam guiding plane. Additionally or alternatively, it is also possible to directly observe the beam guiding plane with the or an additional sensor of the determination device.

The melt pool signal may particularly be determined with a determination device comprising at least a photo diode and/or a camera. By providing a photo diode and/or a camera it is possible to determine the melt pool signal, e.g. with respect to the intensity of the radiation that is emitted from the melt pool and/or with a spatially resolved image of the melt pool signal being generated in the beam guiding plane. Therefore, it is possible to derive the actual position in which the melt pool is generated upon irradiation with the energy beam. The determined actual position is used for the comparison between the actual position and the nominal position in which the melt pool signal is generated, as described before.

Further, a map can be generated, particularly a binary map or an intensity distribution of the beam guiding region during the movement along the defined movement pattern, wherein the map comprises intensity values of the melt pool signal. Inter alia, a grayscale map or a binary map may be generated indicating the intensity of the melt pool signal that is generated in the corresponding locations in the beam guiding plane. Thus, a map of the beam guiding plane can be generated by determining the melt pool signal in the different positions that comprises the position values of the different regions in which a melt pool is generated by guiding the energy beam across the beam guiding plane.

The generated map can be compared with a map that comprises the at least one defined beam path. In other words, it is possible to compare the positions in which the melt pool is generated and the positions in which the melt pool has to be generated, to determine whether the energy beam is guided along the correct beam paths. Thus, if a deviation between the intended irradiation section and an actual irradiation section is present, the maps are not identical, but the comparison can result in the deviation in at least one position. If the sky writing parameters are adjusted properly, the map comprising the intensity values and the map comprising the at least one defined beam path will correspond to each other and may be identical with respect to the positions in which the melt pools are generated.

Therefore, it is possible to calibrate the apparatus based on at least one deviation between the two maps. If, for example, the nominal position of the origin of the melt pool signal and the actual position of the origin of the melt pool signal are not identical, it is possible to adjust the sky writing parameter or multiple sky writing parameters correspondingly to eliminate the deviation and therefore assure that the melt pool is generated in the proper position.

As discussed above, it is possible to either generate the melt pool signal by irradiating a sheet metal, wherein it is also possible to generate the melt pool in a powder bed. This allows for simulating the process conditions more closely to reality, as the energy beam is guided to a powder bed in order to layerwise manufacture the three-dimensional component. Further, it is possible to prepare the apparatus for performing the additive manufacturing process by providing a powder bed in the process chamber, wherein the calibration process can also be performed in the powder bed, e.g. in advance to an additive manufacturing process. It is also possible to perform the calibration process during an additive manufacturing process, e.g. in a region of the beam guiding plane or the build plane that is not used for irradiating build material and layerwise manufacturing the three-dimensional object. Thus, it is possible to assure that the adjusted sky writing parameters are suitable for performing the entire additive manufacturing process, e.g. for eliminating thermal drifts or other variances during the additive manufacturing process.

According to another embodiment of the inventive method, the melt pool can be generated on a calibration body, in particular on a drawn sheet metal or an anodized sheet metal. Thus, instead of generating the melt pool in a powder bed, it is also possible to use a calibration body, such as a test specimen. Generating a melt pool on a defined calibration body instead of generating the melt pool in the powder bed allows for using a defined material, e.g. sheet metal, that is not reactive to the atmosphere and therefore, the environment inside the process chamber does not have to be inertized.

Besides, the invention relates to an apparatus for additively manufacturing three-dimensional objects comprising at least one irradiation device adapted to guide at least one energy beam across the beam guiding plane, wherein the apparatus is adapted to perform the method, as described before. Self-evidently, all details, features and advantages described with respect to the inventive method are fully transferable to the apparatus.

Exemplary embodiments of the invention are described with reference to the Figures.

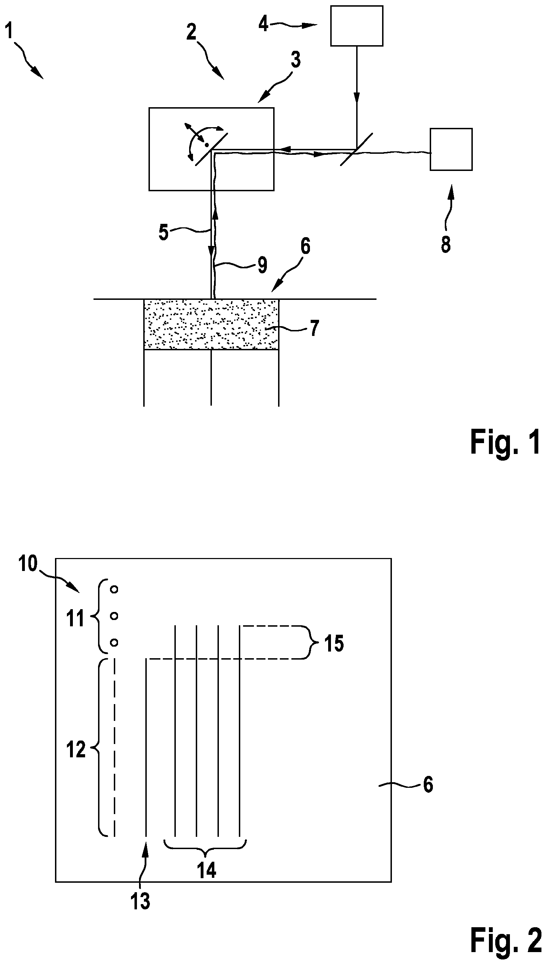

Fig. 1 shows an apparatus 1 for additively manufacturing three-dimensional objects comprising an irradiation device 2 that comprises a beam guiding unit 3 and a beam source 4, e.g. a laser source. The beam guiding unit 3 is adapted to guide an energy beam 5 across a beam guiding plane 6 in which a test specimen, e.g. a calibration body, or build material 7 can be arranged.

In a regular mode of operation of the apparatus 1, build material 7 is arranged in the beam guiding plane 6 in order to be selectively irradiated and thereby consolidated to layerwise manufacture a three-dimensional object. The apparatus 1 further comprises a determination device 8 that is adapted to determine parameters of radiation 9 that is emitted from the beam guiding plane 6 and travels in line with an optical path along which the energy beam 5 is guided through the optical train, in particular through the beam guiding unit 3 to the beam guiding plane 6.

In other words, radiation 9 that is emitted from the beam guiding plane 6, e.g. thermal radiation emitted from the build material 7 or a test specimen arranged in the beam guiding plane 6 or at least a part of the energy beam 5 that is reflected at the surface arranged in the beam guiding plane 6, travels through the beam guiding unit 3 back towards the determination device 8. The apparatus 1 is adapted to perform a method of calibrating the apparatus 1, particularly the irradiation device 2. The method that can be performed on the apparatus 1 is described with respect to Fig. 1 and 2 below.

The irradiation device 2 is adapted to perform a defined movement pattern with the beam guiding unit 3 for guiding the energy beam 5 along a defined beam path 10 that is schematically depicted in Fig. 2 as dotted and dashed contour. The defined beam path 10 comprises a sky writing section 11 and an irradiation section 12. In order to compensate the effects on the mechanical movement of the beam guiding unit 3, e.g. inertia of a movable mirror or the like, the sky writing section 11 allows the mechanical parts of the beam guiding unit to accelerate to a defined guiding velocity. After the guiding velocity is reached, the beam guiding element, e.g. the movable mirror, can be moved with defined velocity to guide the energy beam 5 across the beam guiding plane 6 in that during the irradiation section 12 the energy beam 5 can be guided to the beam guiding plane 6 in order to irradiate the test specimen or the build material 7.

In other words, the defined beam path 10 comprises a movement of the beam guiding element, wherein during the sky writing section 11 the energy beam 5 is not guided to the beam guiding plane 6 and only the beam guiding element of the beam guiding unit 3 is moved and during the irradiation section 12 the energy beam 5 is guided to the beam guiding plane 6 and moved by the movement of the beam guiding element.

Further, Fig. 2 depicts an ideal track 13 that is the result of the sky writing section 11 and the irradiation section 12, if the apparatus 1 and the irradiation device 2 are properly calibrated. Thus, the track 13 is generated by being guided across the beam guiding plane 6 along the irradiation section 12, wherein it is assured that the beam guiding element of the beam guiding unit 3 is already accelerated to the defined beam guiding velocity and the track 13 therefore can be properly irradiated with the energy beam 5. Further, Fig. 2 depicts multiple tracks 14 representing tracks irradiated with the energy beam 5, if the sky writing parameter is not properly adjusted. During the sky writing section 11 the energy beam 5 may be blanked or switched off.

Hence, a deviation 15 results from the misadjustment of the sky writing parameter, for example if the sky writing parameter defining the offset between the start of the movement of the beam guiding element and the start of the beam path of the energy beam 5 in the beam guiding plane 6 is not properly adjusted. Of course, the deviation 15 is merely exemplary, wherein other deviations, e.g. positive or negative deviations from the ideal track 13 are also possible.

For example, the apparatus 1 is adapted to control the irradiation device 2 correspondingly, in order to generate multiple tracks 14, wherein the determination device 8 is adapted to determine a melt pool signal from the beam guiding plane 6, as the energy beam 5 irradiates build material 7 and thereby generates a melt pool emitting radiation 9 that is received by the determination device 8.

The determination device 8 comprises at least one of a camera and/or a photo diode in that the determination device 8 is adapted to determine whether the radiation 9 is generated in the correct position in the beam guiding plane 6. Thus, the determination device 8 is adapted to generate a map, e.g. a map of the beam guiding plane 6, as depicted in Fig. 2. The generated map comprises the positions in which a melt pool signal is generated in the beam guiding plane 6. The generated map can be compared with a map that comprises the nominal positions of the origins of the melt pool signal, e.g. the positions in which a melt pool should be generated, if the apparatus 1 and the irradiation device 2 are properly calibrated.

For example, in a properly calibrated apparatus 1, the plurality of tracks 14 should be parallel and identical to the ideal track 13 with respect to the start and end point. As in this example, a deviation 15 is present, the calibration status of the irradiation device 2 or the apparatus 1, respectively, can be determined as needing a recalibration, in particular an adjustment to the set of sky writing parameters. Thus, the sky writing parameters can be adjusted accordingly in that the sky writing section 11 is adjusted to ensure that the tracks 14 end and begin correctly.

As can be derived from Fig. 1, the determination device 8 is arranged in line with the irradiation device 2 in that the determination process can be performed during an additive manufacturing process inside a process chamber of the apparatus 1. Thus, it is not necessary to irradiate a test specimen and take the test specimen out of the apparatus for calibration purposes. Instead, the determination and calibration process described above can be performed inside the apparatus, e.g. in advance to or during or after an additive manufacturing process is performed.

Further aspects of the invention are provided by the subject matter of the following clauses:
1. A method of calibrating an apparatus (1) for additively manufacturing three-dimensional objects, the method comprising: performing a defined movement pattern with at least one beam guiding unit (3) for guiding an energy beam (5) along a defined beam path (10), wherein the defined movement pattern comprises at least one sky writing section (11) and at least one irradiation section (12), and wherein the apparatus (1) comprises at least one irradiation device (2) adapted to guide the energy beam (5) across a beam guiding plane (6); generating a melt pool along the irradiation section (12); determining a melt pool signal via a determination device (8) of the apparatus (1); comparing the position of the origin of the melt pool signal in the beam guiding plane (6) with the irradiation section (12); and determining a calibration status based on the comparison result.
2. The method of any preceding clause, comprising: adjusting at least one sky writing parameter, in particular a length of a sky writing section, based on the calibration status.
3. The method of any preceding clause, comprising: determining the melt pool signal with a determination device (8) arranged in line with the beam path of the energy beam (5).
4. The method of any preceding clause, comprising: determining the melt pool signal with a determination device (8) comprising at least a photo diode and/or a camera.
5. The method of any preceding clause, comprising: generating a map, in particular a binary map or an intensity distribution of the beam guiding plane (6) during the movement along the defined movement pattern, comprising intensity values of the melt pool signal.
6. The method of any preceding clause, comprising: comparing the map comprising the intensity values with a map comprising the at least one defined beam path (10).
7. The method of any preceding clause, comprising: calibrating the apparatus (1) based on at least one deviation between the two maps.
8. The method of any preceding clause, comprising: generating the melt pool in a build material (7), in particular in a powder bed.
9. The method of any preceding clause, comprising: performing the calibration process during an additive manufacturing process.
10. The method of any preceding clause, comprising: generating the melt pool on a calibration body, in particular on a drawn sheet metal or an anodized sheet metal.
11. An apparatus (1) for additively manufacturing three-dimensional objects, wherein the apparatus (1) comprises at least one irradiation device (2) adapted to guide at least one energy beam (5) across a beam guiding plane (6), wherein the apparatus (1) is adapted to perform the method any preceding clause.
12. The apparatus of any preceding clause, wherein the apparatus is configured to adjust at least one sky writing parameter, in particular a length of a sky writing section, based on the calibration status.
13. The apparatus of any preceding clause, wherein the apparatus is configured to determine the melt pool signal with a determination device (8) arranged in line with the beam path of the energy beam (5).
14. The apparatus of any preceding clause, wherein the apparatus is configured to determine the melt pool signal with a determination device (8) comprising at least a photo diode and/or a camera.
15. The apparatus of any preceding clause, wherein the apparatus is configured to generate a map, in particular a binary map or an intensity distribution of the beam guiding plane (6) during the movement along the defined movement pattern, comprising intensity values of the melt pool signal.
16. The apparatus of any preceding clause, wherein the apparatus is configured to compare the map comprising the intensity values with a map comprising the at least one defined beam path (10).
17. The apparatus of any preceding clause, wherein the apparatus is configured to calibrate the apparatus (1) based on at least one deviation between the two maps.
18. The apparatus of any preceding clause, wherein the apparatus is configured to generate the melt pool in a build material (7), in particular in a powder bed.
19. The apparatus of any preceding clause, wherein the apparatus is configured to perform the calibration process during an additive manufacturing process.
20. The apparatus of any preceding clause, wherein the apparatus is configured to generate the melt pool on a calibration body, in particular on a drawn sheet metal or an anodized sheet metal.

This written description uses exemplary embodiments to describe the presently disclosed subject matter, including the best mode, and also to enable any person skilled in the art to practice such subject matter, including making and using any devices or systems and performing any incorporated methods. The patentable scope of the presently disclosed subject matter is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method of calibrating an apparatus for additively manufacturing three-dimensional objects, the method comprising:
performing a defined movement pattern with at least one beam guiding unit for guiding an energy beam along a defined beam path, wherein the defined movement pattern comprises at least one sky writing section and at least one irradiation section, and wherein the apparatus comprises at least one irradiation device adapted to guide the energy beam across a beam guiding plane;
generating a melt pool along the irradiation section;
determining a melt pool signal via a determination device of the apparatus;
comparing the position of the origin of the melt pool signal in the beam guiding plane with the irradiation section; and
determining a calibration status based on the comparison result.

2. The method of claim 1, comprising:
adjusting at least one sky writing parameter, in particular a length of a sky writing section, based on the calibration status.

3. The method of claim 1 or 2, comprising:
determining the melt pool signal with a determination device arranged in line with the beam path of the energy beam.

4. The method of any preceding claim, comprising:
determining the melt pool signal with a determination device comprising at least a photo diode and/or a camera.

5. The method of any preceding claim, comprising:
generating a map, in particular a binary map or an intensity distribution of the beam guiding plane during the movement along the defined movement pattern, comprising intensity values of the melt pool signal.

6. The method of claim 5, comprising:
comparing the map comprising the intensity values with a map comprising the at least one defined beam path.

7. The method of claim 6 or 7, comprising:
calibrating the apparatus based on at least one deviation between the two maps.

8. The method of any preceding claim, comprising:
generating the melt pool in a build material, in particular in a powder bed.

9. The method of any preceding claim, comprising:
performing the calibration process during an additive manufacturing process.

10. The method of any preceding claim, comprising:
generating the melt pool on a calibration body, in particular on a drawn sheet metal or an anodized sheet metal.

11. An apparatus for additively manufacturing three-dimensional objects, wherein the apparatus comprises at least one irradiation device adapted to guide at least one energy beam across a beam guiding plane, wherein the apparatus is configured to:
perform a defined movement pattern with at least one beam guiding unit for guiding an energy beam along a defined beam path, wherein the defined movement pattern comprises at least one sky writing section and at least one irradiation section, and wherein the apparatus comprises at least one irradiation device adapted to guide the energy beam across a beam guiding plane;
generate a melt pool along the irradiation section;
determine a melt pool signal via a determination device of the apparatus;
compare the position of the origin of the melt pool signal in the beam guiding plane with the irradiation section; and
determine a calibration status based on the comparison result.

12. The apparatus of claim 11, wherein the apparatus is configured to adjust at least one sky writing parameter, in particular a length of a sky writing section, based on the calibration status.

13. The apparatus of claim 11 or 12, wherein the apparatus is configured to determine the melt pool signal with a determination device arranged in line with the beam path of the energy beam.

14. The apparatus of any of claims 11-13, wherein the apparatus is configured to determine the melt pool signal with a determination device comprising at least a photo diode and/or a camera.

15. The apparatus of any of claims 11-14, wherein the apparatus is configured to generate a map, in particular a binary map or an intensity distribution of the beam guiding plane during the movement along the defined movement pattern, comprising intensity values of the melt pool signal.
